# EUROPÄISCHE PATENTSCHRIFT

(11) **EP 4 250 902 B1**
(45) Veröffentlichungstag und Bekanntmachung des Hinweises auf die Patenterteilung: **28.01.2026**
(21) Anmeldenummer: 21830605.8
(22) Anmeldetag: 25.11.2021
(51) Int. Cl.: A01B 39/18, A01M 21/02

(54) **BEIKRAUTREGULIERUNGSMASCHINE**
WEEDS REGULATION MACHINE
MACHINE POUR RÉGULER LES MAUVAISES HERBES

(30) Priorität: 27.11.2020 DE 102020007253
(43) Veröffentlichungstag der Anmeldung: 04.10.2023
(73) Patentinhaber: SLS SYSTEMENTWICKLUNGEN GMBH, 49076 Osnabruck (DE)
(72) Erfinder: STROTHMANN, Wolfram, 49078 Osnabrück (DE)
(74) Vertreter: Lenzing Gerber Stute
(86) Internationale Anmeldenummer: PCT/EP2021/000148
(87) Internationale Veröffentlichungsnummer: WO 2022/111846

(56) Entgegenhaltungen:
- CN-A- 113 079 719
- DE-U1- 29 807 777
- FR-A1- 2 891 692
- US-A1- 2019 082 591

## Beschreibung

Die vorliegende Erfindung bezieht sich auf eine mehrreihige Maschine zur mechanischen Regulierung von Beikräutern in Gärten oder landwirtschaftlichen Feldern.

### Stand der Technik

Mechanische Beikrautregulierung ist ein gefragtes Verfahren zur Regulierung des Beikrautbesatzes in landwirtschaftlichen Flächen, sowohl im ökologischen wie auch im konventionellen Landbau. Zum einen werden zunehmend chemische Herbizide vom Markt genommen, da Zulassungen entfallen oder nicht erteilt werden. Dies ist in der Gefahr unbekannter Folgewirkungen der Freisetzung der Chemikalien, insbesondere Langzeitwirkungen auf Umwelt und menschliche Gesundheit, begründet. Zum anderen werden mit längerem Einsatz der chemischen Mittel in zunehmendem Maße Resistenzen bestimmter Beikräuter beobachtet. Hieraus entstehen Wirkungslücken die im konventionellen Landbau nur durch nicht-chemische Maßnahmen geschlossen werden können. Im ökologischen Landbau ist eine chemische Unkrautbekämpfung grundsätzlich nicht erlaubt, sodass mechanische Beikrautregulierung hier das meistverwendete Verfahren ist.

Innerhalb der mechanischen Beikrautregulierung sind Verfahren bei denen die Beikrautregulierungswerkzeuge, wie Hackschare, Scheiben, Rollsterne o. ä., in den Boden eindringen am verbreitetsten. Bei diesen eindringenden Verfahren muss zwischen flächiger und selektiver Regulierung unterschieden werden. Während die flächige Beikrautregulierung ohne elektronische Ansteuerung der Beikrautregulierungswerkzeuge erfolgt, werden die Werkzeuge bei selektiver Beikrautregulierung gezielt zumindest an den Stellen aktiviert, wo sich ein Beikraut befindet, und gezielt zumindest an den Stellen deaktiviert, wo sich eine Nutzpflanze befindet. Folglich ist eine flächige Beikrautregulierung nur in den Bereichen des Feldes zwischen den Nutzpflanzenreihen möglich, während eine selektive Beikrautregulierung auch im Bereich der Nutzpflanzenreihen möglich ist. Eine flächige Beikrautregulierung zwischen den Nutzpflanzreihen ist beispielsweise aus der Gebrauchsmusterschrift DE 298 07 777 U1 bekannt. Aus der Offenlegungsschrift US 2019/0082591 A1 ist eine Maschine zum Schneiden von Unkraut bekannt. Die Schneidelemente werden zwischen den Nutzpflanzreihen geführt. Zudem offenbart die Anmeldung FR 2891692 A1 ein Verfahren zur Beschneidung von zwei Pflanzreihen. Eine erste Reihe ist eine Nutzpflanzreihe und eine zweite Reihe ist eine Reihe mit Pflanzen zur Aufnahme von Wirkstoffen Es gibt zwei Schneidelemente, die unterschiedliche Höhen zum Boden aufweisen und somit die Pflanzreihen je nach Bedarf in der Höhe beschneiden.

Während sich für die flächige, eindringende, mechanische Beikrautregulierung zwischen den Pflanzreihen, insbesondere in Kombination mit kameragestützter Reihenführung der Maschine, in den letzten Jahren ein breiter Markt mit vielen Anbietern entwickelt hat, ist die eindringende, selektive Beikrautregulierung immer noch vor Allem ein Forschungsthema. Trotz großer Nachfrage beschränkt sich das Angebot hier im Wesentlichen auf wenige Anbieter, die den Bereich zwischen den Pflanzen innerhalb der Reihe bei Kulturen mit langen Pflanzabständen innerhalb der Reihe wiederum flächig durch ein bis zwei Aktoren bearbeiten. Zu nennen sind hier beispielsweise der Robovator der Fa. Kress [NP1] oder der RoboCrop der Fa. Garford [NP2].

Neben den eindringenden Verfahren, gibt es auch einzelne nicht in den Boden eindringende Verfahren. Diese basieren auf unterschiedlichen physiologischen Eigenschaften der Nutzpflanzen und Beikräuter. Der "Top-Cut Collect" ^{™} der Fa. Zürn sammelt Pflanzenbestandteile von Beikräutern ein, welche über einen Nutzpflanzenbestand hinausragen [NP3]. Der "CompCut" ^{™} ist dafür vorgesehen, Beikräuter mit vergleichsweise dicker und unflexibler Sprossachse aus einen Getreidebestand herauszuschneiden, während die flexiblen Getreidestängel die Schnittkämme unbeschadet passieren [NP4].

### Aufgabe

Aufgabe der vorliegenden Erfindung ist es, eine schlagkräftige Maschine zur mechanischen Regulierung von Beikräutern in Gärten oder landwirtschaftlichen Feldern bereitzustellen, welche in den Boden eindringende mit nicht in den Boden eindringenden Elementen integriert und für die nicht eindringende Regulierung die Unterscheidungsqualität auf Basis des physiologischen Merkmals der Pflanzenlänge durch die Integration eines Luftstromes in den Schneidprozess verbessert.

### Lösung

Die Aufgabe wird gelöst durch eine gattungsgemäße Beikrautregulierungsmaschine entsprechend dem Anspruch 1. Eine derart ausgestaltete Maschine ist insbesondere für den Einsatz in Reihenkulturen geeignet, in welchen Sie die Regulierung durch eindringende Werkzeuge zwischen den Pflanzreihen der Nutzpflanzen mit der nicht in den Boden eindringenden Regulierung im Bereich der Pflanzreihen integriert und so beides in einem Arbeitsgang ermöglicht. Insbesondere findet hierbei die nicht-eindringende Bearbeitung auf Basis des physiologischen Merkmals der Pflanzenlänge statt, wobei bedingt durch die um eine horizontale quer zur Fahrrichtung liegende Achse rotierende Welle mit am Radius befestigten, über die Arbeitsbreite verteilten Schneidelementen zusätzlich zur Schneidwirkung ein Luftstrom erzeugt wird, welcher die Pflanzen hochsaugt, bevor der Schneidvorgang durchgeführt wird. Nicht nur aus dem Nutzpflanzenbereich herausragende Beikräuter, sondern auch knickende oder gebogene bzw. anlehnende Beikräuter mit größerer Pflanzenlänge als die Nutzpflanzen werden damit hier im Reihenbereich erfasst. Im Gegensatz hierzu werden beispielsweise beim Einsatz des "TopCut Collect" ^{™} ohne entsprechenden Luftstrom nur aus dem Nutzpflanzenbereich nach oben herausragende Beikräuter erfasst.

Eine Beikrautregulierung mit der erfindungsgemäßen Beikrautregulierungsmaschine ist insbesondere in Reihenkulturen mit Nutzpflanzen geringer Pflanzenlänge, wie Rüben, Kohl, Salat oder ähnlichen besonders vorteilhaft. Insbesondere in fortgeschrittenen Wachstumsstadien, nachdem sich die Einzelpflanzen im Reihenbereich berühren, ist der Einsatz vorteilhaft, da es in diesen Wuchsstadien für den Reihenbereich keine praktikablen eindringenden Regulierungsmöglichkeiten mehr gibt. Durch die Integration kann hier die Regulierung oberhalb des Reihenbereichs mit der ohnehin gängigen Hackmaßnahme im Reihenzwischenbereich kombiniert werden. Insbesondere hochaufstehende Frühjahrsunkräuter, wie Melde oder Disteln, reagieren empfindlich auf Schnittverletzungen und sind somit hier effektiv zu bekämpfen. Durch die separate Einstellbarkeit der Arbeitshöhe der schneidenden Welle mit Schneideelementen und der in den Boden eindringenden Beikrautregulierungswerkzeuge kann des Weiteren sichergestellt werden, dass innerhalb des Wachstumsverlaufes der Nutzpflanzen die Höhe der rotierenden Welle mit Schneidelementen stets so angepasst werden kann, dass die Schnittwirkung knapp oberhalb der Wuchshöhe der Nutzpflanzen stattfindet, somit die Nutzpflanzen nicht beschädigt werden, jedoch Beikräuter mit größerer Pflanzenlänge stets beschädigt werden.

Vorzugsweise ist die Beikrautregulierungsmaschine als gezogenes Anbaugerät für eine landwirtschaftliche Zugmaschine ausgestaltet. Hierbei sind sowohl die Raddimensionen als auch die Spurweiten der Zugmaschine und des tragenden Fahrwerkes der gezogenen Beikrautregulierungsmaschine so ausgelegt, dass die Räder in Arbeitsposition im Bereich zwischen den Pflanzreihen laufen.

In einer Ausgestaltung der erfindungsgemäßen Beikrautregulierungsmaschine ist die Maschine als gezogenes Anbaugerät für eine landwirtschaftliche Zugmaschine ausgestaltet, wobei die gezogene Maschine über ein tragendes Fahrwerk mit mindestens einer Achse verfügt und die Räder dieser Achse aktiv lenkbar sind. Dies hat zum einen den Vorteil, dass die Räder der gezogenen Maschine beim Einfahren in die Pflanzreihen derart gelenkt werden können, dass weniger Nutzpflanzen beschädigt werden. Des Weiteren kann durch aktive Lenkung der Räder der gezogenen Maschine zusätzlich zur Lenkung der Zugmaschine eine verbesserte Führung der gezogenen Maschine entlang der Pflanzreihen der Nutzpflanzen gewährleistet werden. Dies gilt in besonderem Maße in abschüssigem Gelände.

Besonders vorteilhaft ist die Ausführung der erfindungsgemäßen Beikrautregulierungsmaschine als gezogenes Anbaugerät mit aktiv lenkbaren Räder für eine landwirtschaftliche Zugmaschine, wenn die aktiv lenkbaren Räder automatisch gesteuert werden. Als Führungssignale eignen sich hierbei insbesondere GNSS-basierte Positionierungsdaten oder der Positionsdaten der Pflanzreihen relativ zur Maschine basierend auf sensorbasierter Erfassung, beispielsweise mit Hilfe von Kameras und entsprechender Auswerteelektronik und Software.

Alternativ kann die Beikrautregulierungsmaschine als landwirtschaftlicher Selbstfahrer oder autonomer Roboter ausgestaltet sein. Auch in dieser Konstellation sind sowohl die Raddimensionen als auch die Spurweiten des tragenden Fahrwerkes Beikrautregulierungsmaschine so ausgelegt, dass die Räder in Arbeitsposition im Bereich zwischen den Pflanzreihen laufen.

Die Vorzüglichkeit der erfindungsgemäßen Beikrautregulierungsmaschine ist insbesondere dann gegeben, wenn diese über eine große Arbeitsbreite von beispielsweise mehr als 8 Metern verfügt. In fortgeschrittenen Wachstumsstadien der Nutzpflanzen können durch Überfahren der Blätter der Nutzpflanzen, welche in den Reihenzwischenraum ragen, auch dann Beschädigungen an den Nutzpflanzen entstehen, wenn die Spurweite und Reifenbreite der Beikrautregulierungsmaschine und ggf. der Zugmaschine so ausgelegt sind, dass diese in den Reihenzwischenbereich passen. Hierbei wird zwar der Wachstumskegel der Nutzpflanzen nicht überfahren, wohl jedoch Teile der Blätter. Daher ist eine große Arbeitsbreite der erfindungsgemäßen Beikrautregulierungsmaschine vorteilhaft, da - neben der Leistungssteigerung - weniger Beschädigungen an den Nutzpflanzen entstehen, wenn beispielsweise nur 2 Reihen pro 8 m, 12 m oder 15 m Arbeitsbreite bei der Überfahrt beschädigt werden. Bei wiederholter Bearbeitung der Nutzpflanzenkulturen mit der erfindungsgemäßen Beikrautregulierungsmaschine, beispielsweise im zeitlichen Intervall von 2 bis 3 Wochen, ist es sinnvoll, wenn die Fahrwerksräder hierbei stets in der gleichen Spur laufen, somit die bereits durch die vorherige Beschädigung zurückgebildeten Reihen erneut angefahren werden und somit der Folgeschaden geringer ist.

In einer Ausführung der erfindungsgemäßen Maschine ist diese zur Erreichung einer großen Arbeitsbreite aus mehreren Teilsegmenten, beispielsweise 3, 4 oder 5 Teilsegmenten, aufgebaut, welche jeweils über mindestens eine separate, um eine horizontale quer zur Fahrrichtung liegende Achse rotierende Welle mit am Radius befestigten, über die Arbeitsbreite verteilten Schneidelementen verfügen. Die Aufteilung dient zum einen der verbesserten Kraftaufnahme und Gewichtsverteilung. Besonders vorteilhaft ist der mehrteilige Aufbau in einer Ausführung der erfindungsgemäßen Maschine, in welcher die einzelnen Teilsegmente, beispielsweise mechanisch, elektrisch, pneumatisch oder hydraulisch angetrieben in Ihrer Lage zu einander verlagert werden können und die in Arbeitsposition seitlich äußeren Teilsegmente in Transportposition in Transportrichtung vor oder hinter oder über das mittlere Teilsegment verlagert oder geklappt werden können. Auf diese Weise verringert sich die Transportbreite der Maschine um einen Straßentransport zu ermöglichen.

In einer vorteilhaften Ausgestaltung der erfindungsgemäßen Maschine sind die einzelnen Teilsegmente im mehrteiligen Aufbau mit jeweils mindestens einem zusätzliche Führungsrad ausgestattet, zusätzlich zu den tragenden Rädern des Fahrwerks. Diese Führungsräder berühren in Arbeitsposition den Boden jedoch nicht in Transportposition. Sie gewährleisten in Arbeitsposition eine verbesserte Führung der Arbeitshöhe der Welle mit Schneidelementen. Die Führungsräder sind so angeordnet, dass Sie in Arbeitsposition zwischen den Pflanzreihen der Nutzpflanzen laufen. Aufgrund der geringeren Traglast im Verhältnis zu den tragenden Rädern des Fahrwerks können die Führungsräder kleiner dimensioniert werden, sodass Beschädigungen an den Nutzpflanzen durch Überfahren der seitlich in den Reihenzwischenraum ragenden Blätter weitgehend vermieden werden können.

In einer vorteilhaften Ausgestaltung der erfindungsgemäßen Maschine sind die am Radius der um eine horizontale quer zur Fahrrichtung liegende Achse rotierende Welle befestigten Schneidelemente so ausgeformt, dass diese eine weitgehend durchgängige Breite aufweisen und im Bereich der Befestigung an der Welle noch mindestens 50 vom Hundert der Breite der Schnittkante haben. Eine Verjüngung der Schneidelemente im Bereich der Befestigung an die Welle kann erforderlich sein, um ein Verhaken der Elemente untereinander zu vermeiden. Es ist allerdings vorteilhaft, wenn die Schneidelemente eine durchgängige Breite und im Bereich der Befestigung an der Welle noch eine Breite von mindestens 50 vom Hundert der Breite der Schnittkante haben, da hierdurch die Erzeugung eines starken Luftstromes sichergestellt wird. Insbesondere ist der Luftstrom bei derartig ausgeformten Schneidelementen stärker als bei Schneidelemente mit flacher Aufnahme an der Welle, beispielsweise in L- oder T-Form. Der Luftstrom ist vorteilhaft, da dieser im Arbeitsbetrieb die Beikräuter vor der Durchführung des Schnittvorganges hochsaugt.

In einer vorteilhaften Ausführung der erfindungsgemäßen Maschine sind an der um eine horizontale quer zur Fahrrichtung liegende Achse rotierenden Welle entlang der Arbeitsbreite der Maschine stets nur an den Positionen Schneidelemente befestigt, welche sich in Arbeitsposition oberhalb einer Pflanzreihe befinden, nicht jedoch an den Positionen, die sich in Arbeitsposition oberhalb der Reihenzwischenräume befinden. Hierdurch wird eine Reduktion des Energieaufwandes erzielt.

In einer vorteilhaften Ausführung der erfindungsgemäßen Maschine sind an der um eine horizontale quer zur Fahrrichtung liegende Achse rotierenden Welle entlang der Arbeitsbreite der Maschine stets nur an den Positionen Schneidelemente befestigt, welche sich in Arbeitsposition oberhalb einer Pflanzreihe befinden, und an den Positionen über den Reihenzwischenräumen sind gewinkelte Windflügel befestigt, welche keine Schneidwirkung haben sondern zusätzlich einen seitlichen Luftstrom erzeugen, welcher die Beikräuter im Randbereich der Pflanzreihen in den in den Bereich der Schneidelement oberhalb der Pflanzreihen einleitet.

In einer vorteilhaften Ausführung der erfindungsgemäßen Maschine ist die Arbeitshöhe der rotierenden Welle mit Schneidelementen durch einen pneumatischen, hydraulischen oder elektromechanischen Antrieb verstellbar. Hierdurch kann der Fahrer die Arbeitshöhe komfortabel aus der Kabine heraus einstellen, ohne absteigen zu müssen oder den Arbeitsvorgang unterbrechen zu müssen.

In einer vorteilhaften Ausführung der erfindungsgemäßen Maschine ist die Arbeitshöhe der rotierende Welle mit Schneidelementen durch einen pneumatischen, hydraulischen oder elektromechanischen Antrieb verstellbar und wird durch eine automatische Regelung angesteuert. In dieser Ausführung umfasst die Maschine zusätzlich mindestens einen optischen Sensor, welche in Kombination mit mindestens einer Recheneinheit und Software den Pflanzenbestand scannt, Nutzpflanzen und Beikräuter unterscheidet und die Höhe der Nutzpflanzen erfasst. Auf Basis des auf diese Weise erzeugten Signals der Höhen der Nutzpflanzen wird die Arbeitshöhe der Welle mit Schneidelementen automatisch so angepasst, dass diese sich während des Arbeitsvorganges stets möglichst nah an der Höhe der Nutzpflanzen befindet, beispielsweise 2 cm oberhalb oder 1 cm unterhalb, und dass die Arbeitshöhe bei im Feld schwankender Höhe der Nutzpflanzen entsprechend dieser Schwankung nachgeführt wird. Hierdurch wird ein optimales Bearbeitungsergebnis erzeugt.

Es wird ausdrücklich darauf hingewiesen, dass die vorstehend beschriebenen Ausgestaltungen der Erfindung jeweils für sich, aber auch in einer beliebigen Kombination untereinander mit dem Gegenstand des Hauptanspruchs kombinierbar sind, soweit dem keine zwingenden technischen Hindernisse entgegenstehen.

Weitere Abwandlungen und Ausgestaltungen der erfindungsgemäßen Maschine lassen sich der nachfolgenden elementweisen Beschreibung und den Zeichnungen entnehmen.

Die erfindungsgemäße Vorrichtung soll nun anhand einiger Ausführungsbeispiele näher beschrieben werden. Es zeigen:
**Abbildung 1****:** eine mögliche Anordnung wirkenden Arbeitswerkzeuge der Beikrautregulierungsmaschine in der Seitenansicht,
**Abbildung 2****:** eine erfindungsgemäße Beikrautregulierungsmaschine mit einer Welle mit Schneidelementen in Arbeitsposition in der Draufsicht,
**Abbildung 3****:** eine erfindungsgemäße Beikrautregulierungsmaschine mit 3 Teilsegmenten mit jeweils einer separaten Welle mit Schneidelementen in Arbeitsposition in der Draufsicht,
**Abbildung 4****:** eine erfindungsgemäße Beikrautregulierungsmaschine mit 3 Teilsegmenten mit jeweils einer separaten Welle mit Schneidelementen in Transportposition in der Draufsicht.

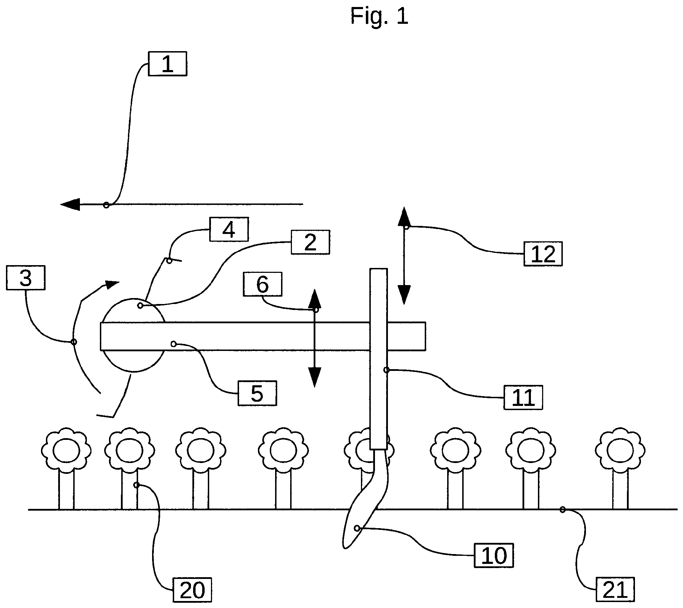

**Abbildung 1** zeigt eine mögliche Anordnung der wirkenden Arbeitswerkzeuge der Beikrautregulierungsmaschine in der Seitenansicht. Die Vorrichtung wird entlang der Fahrtrichtung **1** durch den Bestand von Nutzpflanzen **20** gefahren. Die rotierende Welle **2** rotiert entlang der Drehrichtung **3.** Die Rotationsachse liegt somit quer zur Fahrtrichtung, in dieser Abbildung liegt sie vertikal zur Bildebene. An der rotierenden Welle **2** sind Schneidelemente **4** befestigt. Die rotierende Welle wird durch den Träger **5** aufgenommen. Weiterhin umfasst die Vorrichtung in den Boden eindringende Beikrautregulierungswerkzeuge **10,** hier Hackschare. Diese Arbeiten im Reihenzwischenraum, daher in der Bildebene vor den Nutzpflanzen **20.** Das in den Boden eindringende Beikrautregulierungswerkzeug wird durch den Träger **11** aufgenommen. Der Träger **11** kann entlang der Verstellrichtung **12** verschoben werden. Der Träger **5** kann entlang der Verstellrichtung **6** verschoben werden. Hierdurch sind die Arbeitshöhe der Schneidelemente **4** und die Arbeitstiefe der in den Boden eindringenden Beikrautregulierungswerkzeuge **10,** hier Hackschare, unabhängig voneinander verstellbar, sodass die Arbeitshöhe der Schneidelemente **4** stets im Bereich der Wuchshöhe der Nutzpflanzen **20** liegt und die Arbeitstiefe der in den Boden eindringenden Beikrautregulierungswerkzeuge **10** unterhalb der Bodenoberfläche **20** liegt.

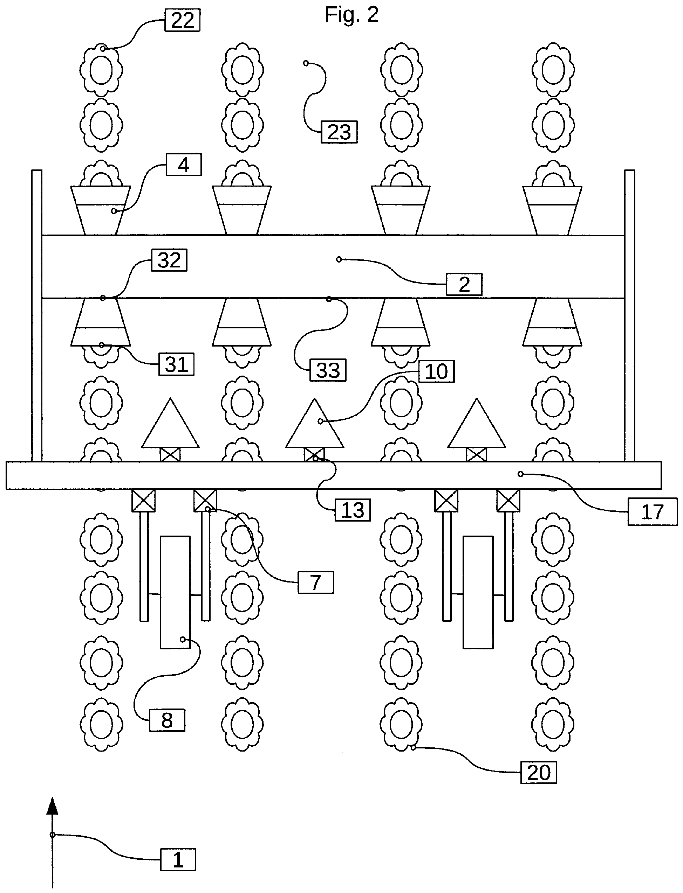

**Abbildung 2** zeigt eine erfindungsgemäße Beikrautregulierungsmaschine mit einer Welle mit Schneidelementen in Arbeitsposition in der Draufsicht. Die Maschine ist hier einteilig aufgebaut und verfügt nur über eine um eine quer zur Fahrrichtung liegende Achse rotierende Welle mit Schneidelementen **2.** Die Maschine wird entlang der Fahrtrichtung **1** über den Bestand von Nutzpflanzen **20** gefahren. Im Bereich der Nutzpflanzenreihen **22** ist die rotierende Welle **2** mit Schneidelementen **4** ausgestattet. Im Bereich des Reihenzwischenraumes **23** sind an der rotierenden Welle **2** keine Schneidelemente befestigt **33.** Die Breite der Schneidelemente ist weitgehend durchgängig und liegt im Bereich der Befestigung des Schneidelementes an die rotierende Welle **32** noch bei mehr als 50 vom Hundert der Schnittbreite des Schneidelementes **31.** Das Fahrwerk **17** ist in diesem Ausführungsbeispiel mit dem Rahmen, der die rotierende Welle aufnimmt, als ein Teil integriert. Im Reihenzwischenbereich arbeiten die in den Boden eindringenden Beikrautregulierungswerkzeuge **10,** hier Hackschare. Über die Höhenverstellung **13** sind die in den Boden eindringenden Beikrautregulierungswerkzeuge relativ zum Rahmen **17,** welcher die rotierende Welle aufnimmt, vertikal verschiebbar. Die Fahrwerksräder **8** laufen im Reihenzwischenraum und sind durch die Höhenverstellung **7** relativ zum Rahmen **17,** welcher die rotierende Welle aufnimmt, vertikal verschiebbar. Durch die Kombination der beiden vertikalen Stellvorrichtungen sind die Arbeitshöhe der Schneidelemente **4** und die Arbeitstiefe der in den Boden eindringenden Beikrautregulierungswerkzeuge **10** unabhängig voneinander einstellbar.

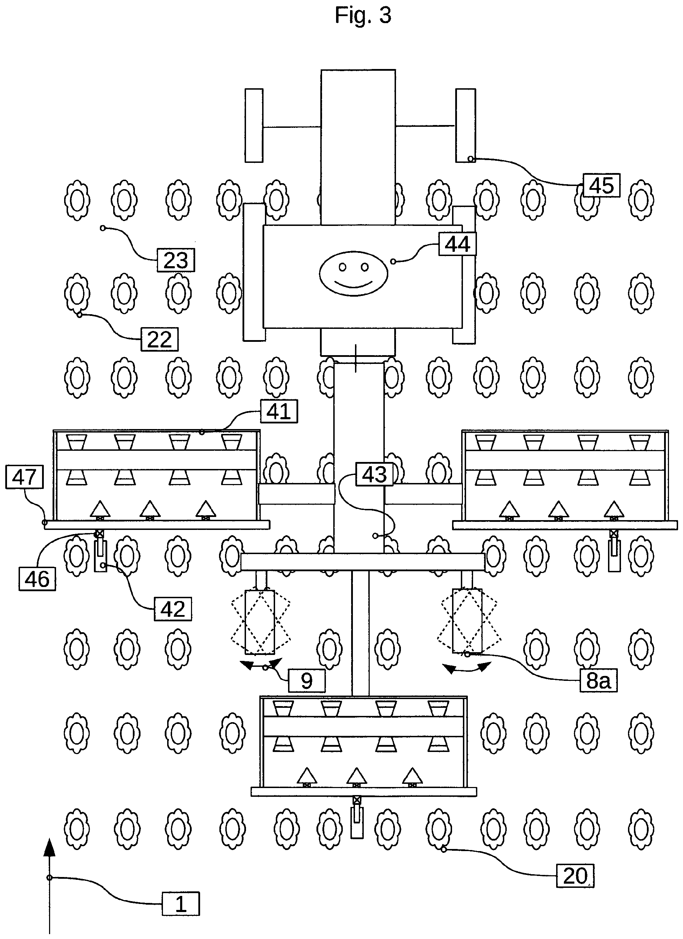

**Abbildung 3** zeigt eine erfindungsgemäße Beikrautregulierungsmaschine mit 3 Teilsegmenten mit jeweils einer separaten Welle mit Schneidelementen in Arbeitsposition in der Draufsicht. Die Beikrautregulierungsmaschine wird entlang der Fahrtrichtung 1 über den Bestand von Nutzpflanzen **20** gefahren. Die Beikrautregulierungsmaschine verfügt hier über 3 Teilsegmente **41,** die jeweils über eine separate rotierende Welle mit Schneidelementen und relativ zum Rahmen des Teilsegmentes **47** höhenverstellbare in den Boden eindringende Beikrautregulierungswerkzeuge umfassen. Diese Teilsegmente **41** werden durch den das zentrale Fahrwerk **43** der Beikrautregulierungsmaschine aufgenommen. Die Fahrwerksräder **8a** sind hier lenkbar entlang der Lenkrichtung **9.** Die Beikrautregulierungsmaschine wird durch eine bemannte landwirtschaftliche Zugmaschine **44** gezogen. Die Teilsegmente sind mit Führungsrädern **42** zur Tiefenführung ausgestattet, die in Arbeitsposition im Reihenzwischenraum **23** laufen. Über die Höhenverstellung **46** können die Führungsräder **42** relativ zum Rahmen **47** des Teilsegmentes **41,** der rotierende Welle mit Schneidelementen aufnimmt, vertikal verschoben werden. Durch diese Verstellvorrichtungen in Kombination mit den Verstellvorrichtungen der in den Boden eindringenden Beikrautregulierungswerkzeuge sind zum einen die Arbeitshöhe der rotierenden Wellen **2** mit Schneidelementen **4** und die Arbeitstiefe der der in den Boden eindringenden Beikrautregulierungswerkzeuge **10** unabhängig voneinander einstellbar. Zum anderen sind auch die Arbeitshöhen der separaten Wellen mit Schneidelementen der einzelnen Teilsegmente auf diese Weise unabhängig voneinander einstellbar. Die Spurweite und Dimension der Fahrwerksräder **8a** der Beikrautregulierungsmaschine sowie der Räder **45** der Zugmaschine sind so ausgelegt, dass diese im Reihenzwischenraum **23** laufen. Beschädigungen der Nutzpflanzenreihen **22** werden so vermieden.

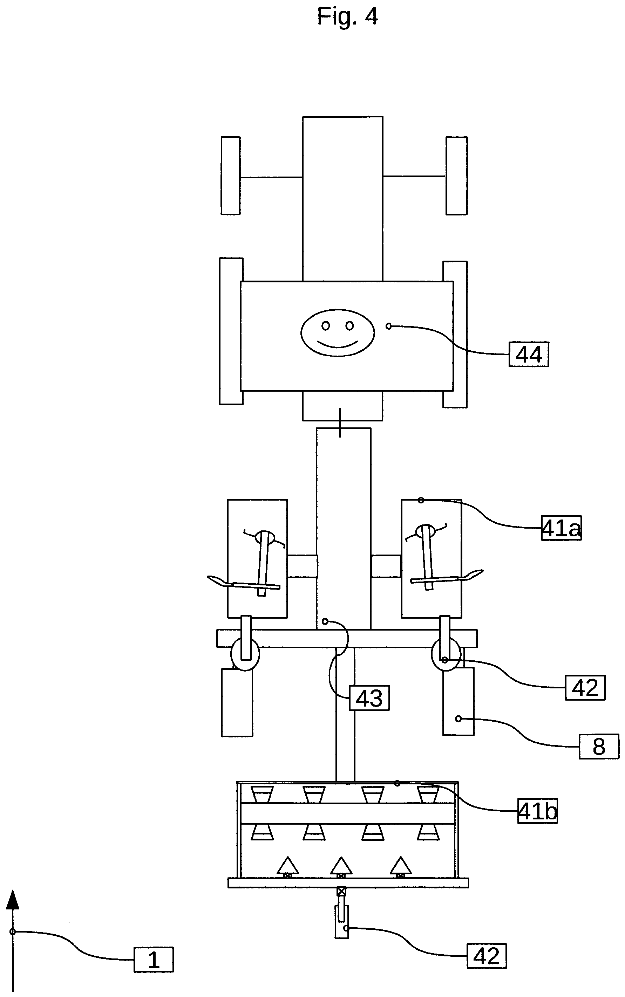

**Abbildung 4** zeigt eine erfindungsgemäße Beikrautregulierungsmaschine mit 3 Teilsegmenten mit jeweils einer separaten Welle mit Schneidelementen in Transportposition in der Draufsicht. Das in Fahrtrichtung **1** innere Teilsegment **41b** ist für den Transport lediglich angehoben. Die in Fahrtrichtung **1** äußeren Teilsegmente **41a** sind für den Transport vertikal zur Mitte hin geklappt und befinden sich vor dem inneren Teilsegment **41b.** Die Führungsräder **42** haben in Transportposition keinen Bodenkontakt, lediglich die Fahrwerksräder **8** des Fahrwerks **43** dienen dem Transport und haben in Transportposition Bodenkontakt. Die Beikrautregulierungsmaschine wird durch die Zugmaschine **44** gezogen.

Die vorstehenden Ausführungsbeispiele dienen nur der Erläuterung der Erfindung. Die Erfindung ist nicht auf die vorstehend beschriebenen Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugszeichenliste

1 Fahrtrichtung Beikrautregulierungsmaschine
2 Um eine quer zur Fahrrichtung liegende Achse rotierende Welle mit Schneidelementen
3 Rotationsrichtung Welle mit Schneidelementen
4 Schneidelement
5 Trägerrahmen für Welle mit Schneidelementen
6 Höhenverstellrichtung für Trägerrahmen von Welle mit Schneidelementen
7 Höhenverstellung für Trägerrahmen von Welle mit Schneidelementen
8 Fahrwerksrad
8a Fahrwerksrad, hier lenkbar
9 Lenkbewegungsrichtung Fahrwerksrad
10 In den Boden eindringendes Beikrautregulierungswerkzeug, hier Hackschar
11 Träger für in den Boden eindringendes Beikrautregulierungswerkzeug
12 Höhenverstellrichtung für Träger von in den Boden eindringendes Beikrautregulierungswerkzeug
13 Höhenverstellung für Träger von in den Boden eindringendes Beikrautregulierungswerkzeug
17 Fahrwerk inkl. Rahmen, der die rotierende Welle mit Schneidelementen aufnimmt
20 Nutzpflanze
21 Bodenoberfläche
22 Nutzpflanzenreihe
23 Reihenzwischenraum
31 Schnittkante Schneidelement
32 Befestigung Schneidelement an Welle mit mehr als 50 vom Hundert der Breite der Schnittkante
33 Keine Schneidelemente im Bereich über dem Reihenzwischenraum
41 Teilsegment der Beikrautregulierungsmaschine mit separater Welle mit Schneidelementen
41a Teilsegment der Beikrautregulierungsmaschine mit separater Welle mit Schneidelementen, hier äußeres Element vertikal in Transportposition geklappt
41b Teilsegment der Beikrautregulierungsmaschine mit separater Welle mit Schneidelementen, hier entlang der Fahrrichtung inneres Element
42 Führungsrad zur Tiefenführung des Teilsegmentes
43 Fahrwerk der Beikrautregulierungsmaschine
44 Bemannte landwirtschaftliche Zugmaschine
45 Spurweite und Reifendimension der Räder der Zugmaschine an Reihenabstand der Nutzpflanzen angepasst
46 Höhenverstellung für Tiefenführungsrad
47 Rahmen des Teilsegmentes, der die rotierende Welle mit Schneidelementen aufnimmt

### Nichtpatentliteratur

[NP1] "Robovator, Mechanisches Selektivhacksystem" https://www.kress-landtechnik.eu/de/produkte/robovator.php, abgerufen am 09.03.2020.
[NP2] "Robocrop InRow Weeder", https://garford.com/de/robocrop-inrow-weeder/, abgerufen am 09.03.2020.
[NP3] "TOP CUT collect - Feldhygiene nachhaltig verbessern", https://www.zuern.de/schneidwerke/produkte/mech-unkrautkontrolle/top-cutcollect/eigenschaften.html, abgerufen am 24.11.2020.
[NP4] "Mechanical weeders: What are the options?", https://www.fwi.co.uk/arable/cropmanagement/weed-management/mechanical-weeders-what-are-the-options, abgerufen am 24.11.2020.

## Patentansprüche

1. Beikrautregulierungsmaschine zur Bearbeitung von Reihenkulturen umfassend mindestens eine um eine horizontale quer zur Fahrtrichtung liegende Achse rotierende Welle (**2)** mit am Radius befestigten Schneidelementen (**4)**, welche während des Arbeitsvorganges mindestens über den Nutzpflanzreihen (**22)** wirksam ist, mindestens zwei in den Boden eindringenden Beikrautregulierungswerkzeugen (**10)**, welche während des Arbeitsvorganges im Reihenzwischenraum (**23)** angeordnet sind, ein Fahrwerk (**17,43)** mit Rädern (**8)** oder Raupen, welches während des Arbeitsvorganges im Reihenzwischenraum (**23)** läuft und die Beikrautregulierungsmaschine über die Anbauflächen trägt, die Maschine ist mit mindestens einer Höhenverstellvorrichtung (**13)** für die in den Boden eindringenden Beikrautregulierungswerkzeuge (**10)** und mindestens einer Höhenverstellvorrichtung (**7,46)** der rotierenden Welle mit Schneidelementen (**2)** ausgestattet, welche in der Weise kombiniert sind, dass die Arbeitshöhe der Welle mit Schneidelementen (**2)** und die Arbeitstiefe der Boden eindringenden Beikrautregulierungswerkzeuge (**10)** unabhängig voneinander einstellbar sind.

2. Beikrautregulierungsmaschine nach Anspruch 1, **dadurch gekennzeichnet, dass** die Maschine als gezogenes Anbaugerät für eine landwirtschaftliche Zugmaschine (**44)** ausgestaltet ist.

3. Beikrautregulierungsmaschine nach Anspruch 2, **dadurch gekennzeichnet, dass** mindestens zwei Räder (**8a)** des Fahrwerks (**43)** der Beikrautregulierungsmaschine aktiv lenkbar (**9)** sind.

4. Beikrautregulierungsmaschine nach Anspruch 3, **dadurch gekennzeichnet, dass** mindestens die aktiv lenkbaren Räder (**8a)** des Fahrwerks (**43)** der Beikrautregulierungsmaschine automatisch gelenkt werden, wobei das Steuersignal basierend auf GNSS-Koordinaten oder Sensoren, welche die Nutzpflanzenreihen (**22)** erfassen, ermittelt wird.

5. Beikrautregulierungsmaschine nach Anspruch 1, **dadurch gekennzeichnet, dass** die Maschine aus mehreren, vorzugsweise 3 oder 5, Teilsegmenten (**41)** aufgebaut ist, welche jeweils über mindestens eine separate, horizontal rotierende Welle mit Schneidelementen verfügen und die Positionen der Teilsegmente zueinander relativ veränderbar sind, wobei die in Arbeitsposition äußeren Elemente (**41a)** in Transportposition in eine oberhalb und/oder in Transportrichtung vor oder hinter dem inneren Element (**41b)** verbracht werden.

6. Beikrautregulierungsmaschine nach Anspruch 1, **dadurch gekennzeichnet, dass** die Teilsegmente jeweils über mindestens ein Führungsrad (**42)** verfügen, welche in Arbeitsposition auf den Boden abgelassen werden und das Teilsegment in der Höhe führen, jedoch in Transportposition nicht den Boden berühren, wobei der Abstand der Führungsräder zueinander und zu den Rädern des Fahrwerks so gestaltet ist, dass diese in Arbeitsposition zwischen den Nutzpflanzenreihen (**22)** laufen.

7. Beikrautregulierungsmaschine nach Anspruch 1, **dadurch gekennzeichnet, dass** die Schneidelemente (**4**) bis zu Ihrer Anbindung an die Welle durchgehend mindestens die 50 vom Hundert der Breite der Schnittkante (31) aufweisen, um einem Luftstrom zu erwirken, welcher die Beikräuter vor der Schneidaktion ansaugt.

8. Beikrautregulierungsmaschine nach Anspruch 1, **dadurch gekennzeichnet, dass** über die Arbeitsbreite der horizontal rotierenden Welle (**2)** lediglich an den Stellen Schneidelemente (**4)** montiert sind, welche in Arbeitsposition über der Nutzpflanzenreihe (**22)** wirksam sind, nicht jedoch in den Bereichen (**33),** welche sich Arbeitsposition über dem Reihenzwischenraum (**23)** befinden.

9. Beikrautregulierungsmaschine nach Anspruch 8, **dadurch gekennzeichnet, dass** über die Arbeitsbreite der horizontal rotierenden Welle in den Bereichen (**33),** welche sich Arbeitsposition über dem Reihenzwischenraum (**23)** befinden, gewinkelte Windflügel montiert sind, welche ein Hochsaugen der Beikrautpflanzenmasse und Einleiten derselben in den Bereich über der Nutzpflanzenreihe (**22)** bewirken.

10. Beikrautregulierungsmaschine nach Anspruch 1, **dadurch gekennzeichnet, dass** die Arbeitshöhe der horizontal rotierenden Welle (**2)** durch einen hydraulischen, pneumatischen oder elektromechanischen Antrieb verstellbar ist.

11. Beikrautregulierungsmaschine nach Anspruch 10, weiterhin umfassend mindestens ein Sensorsystem zur Detektion von Nutzpflanzen (**20)** und Erfassung von deren Wuchshöhe, **dadurch gekennzeichnet, dass** die Arbeitshöhe der rotierenden Welle (**2)** mit Schneidelementen (**4)** in der Art automatisch im Feld verändert wird, dass die Wirkhöhe der Schneidelemente (**4)** bei schwankender Wuchshöhe der Nutzpflanzen (**20)** an verschiedenen Stellen im Feld anhand der erkannten Wuchshöhe angepasst wird.

## Claims

1. Weed control machine for working on row crops, comprising at least one shaft (**2)** rotating about a horizontal axis transverse to the direction of travel, with cutting elements (**4)** attached to the radius, which are effective at least above the crop rows **(22)** during working operation, at least two weed control tools (**10)** that penetrate the ground and are arranged in the inter-row space (**23)** during working operation, a chassis (**17, 43)** with wheels (**8)** or tracks, which runs in the inter-row space (**23)** during working operation and carries the weed control machine over the cultivated areas, the machine is equipped with at least one height adjustment device (**13)** for the weed control tools (**10)** penetrating into the ground and at least one height adjustment device (**7, 46)** for the rotating shaft with cutting elements (**2),** which are combined in such a way that the working height of the shaft with cutting elements (**2)** and the working depth of the weed control tools (**10)** penetrating the ground can be adjusted independently of each other.

2. Weed control machine according to claim 1, **characterized in that** the machine is designed as a towed attachment for an agricultural tractor (**44).**

3. Weed control machine according to claim 2, **characterized in that** at least two wheels (**8a)** of the chassis (**43)** of the weed control machine are actively steerable (**9).**

4. Weed control machine according to claim 3, **characterized in that** at least the actively steerable wheels (**8a)** of the chassis (**43)** of the weed control machine are steered automatically, wherein the control signal is determined based on GNSS coordinates or sensors that detect the crop rows (**22).**

5. Weed control machine according to claim 1, **characterized in that** the machine is constructed from several, preferably 3 or 5, partial segments (**41),** each of which has at least one separate, horizontally rotating shaft with cutting elements, and the positions of the partial segments relative to each other can be changed, whereby the outer elements (**41a)** in a working position are moved in a transport position to a position above and/or in the transport direction in front of or behind the inner element (**41b).**

6. Weed control machine according to claim 1, **characterized in that** the partial segments each have at least one guide wheel (**42)** which, in the working position, is lowered to the ground and guides the partial segment in height, but does not touch the ground in the transport position, whereby the distance between the guide wheels and between the guide wheels and the wheels of the chassis is designed such that, in the working position, they run between the rows of crops (**22).**

7. Weed control machine according to claim 1, **characterized in that** the cutting elements (**4**) have a width of at least 50 percent of the width of the cutting edge (**31)** up to their connection to the shaft in order to create an air flow which sucks in the weeds before the cutting action.

8. Weed control machine according to claim 1, **characterized in that** cutting elements (**4)** are mounted across the working width of the horizontally rotating shaft (**2)** only at those points which are effective in the working position above the crop row (**22),** but not in the areas (**33)** which are in the working position above the inter-row space (**23).**

9. Weed control machine according to claim 8, **characterized in that** angled wind wings are mounted across the working width of the horizontally rotating shaft in the areas (**33)** which are in the working position above the inter-row space (**23),** which cause the weed mass to be sucked up and directed into the area above the crop row (**22).**

10. Weed control machine according to claim 1, **characterized in that** the working height of the horizontally rotating shaft (**2)** is adjustable by means of a hydraulic, pneumatic, or electromechanical drive.

11. Weed control machine according to claim 10, further comprising at least one sensor system for detecting crops (**20)** and recording their height, **characterized in that** the working height of the rotating shaft (**2)** with cutting elements (**4)** is automatically changed in the field in such a way that the effective height of the cutting elements (**4)** is adjusted at different points in the field based on the detected growth height when the growth height of the crops (**20)** varies.

## Revendications

1. Machine de régulation des adventices en vue du traitement de cultures en rangées, comprenant au moins un arbre (2) qui tourne autour d'un axe horizontal transversal par rapport à la direction de déplacement et qui présente des éléments de coupe (4) fixés au niveau d'un rayon, lequel arbre, pendant l'opération de travail, est efficace au moins sur les rangées de plantes utiles (22), au moins deux outils de régulation des adventices (10) qui pénètrent dans le sol et qui, pendant l'opération de travail, sont agencés dans l'espace inter-rangées (23), un train de roulement (17, 43) qui comprend des roues (8) ou des chenilles et qui passe dans l'espace inter-rangées (23) pendant l'opération de travail et qui supporte la machine de régulation des adventices au-dessus des surfaces cultivées, la machine étant équipée d'au moins un dispositif d'ajustement de hauteur (13) destiné aux outils de régulation des adventices (10) pénétrant dans le sol et d'au moins un dispositif d'ajustement de hauteur (7, 46) de l'arbre rotatif muni d'éléments de coupe (2), lesquels dispositifs d'ajustement de hauteur sont combinés de telle manière que la hauteur de travail de l'arbre muni d'éléments de coupe (2) et la profondeur de travail des outils de régulation des adventices (10) pénétrant dans le sol peuvent être ajustées indépendamment l'une de l'autre.

2. Machine de régulation des adventices selon la revendication 1, **caractérisée en ce que** la machine est conçue comme un accessoire tracté destiné à un tracteur agricole (44).

3. Machine de régulation des adventices selon la revendication 2, **caractérisée en ce qu'**au moins deux roues (8a) du train de roulement (43) de la machine de régulation des adventices peuvent être orientées (9) de manière active.

4. Machine de régulation de adventices selon la revendication 3, **caractérisée en ce qu'**au moins les roues (8a), pouvant être orientées de manière active, du train de roulement (43) de la machine de régulation des adventices sont orientées de manière automatique, le signal de commande étant déterminé en se basant sur des coordonnées GNSS ou des capteurs qui détectent les rangées de plantes utiles (22).

5. Machine de régulation des adventices selon la revendication 1, **caractérisée en ce que** la machine est composée de plusieurs, de manière préférée de 3 ou de 5, sous-segments (41) qui disposent respectivement d'au moins un arbre séparé tournant horizontalement et muni d'éléments de coupe, et les positions des sous-segments peuvent être modifiées relativement les unes par rapport aux autres, des éléments extérieurs (41a) en position de travail étant, dans une position de transport, ramenés vers le haut et/ou dans la direction de transport devant ou derrière l'élément intérieur (41b).

6. Machine de régulation des adventices selon la revendication 1, **caractérisée en ce que** les sous-segments disposent respectivement d'au moins une roue de guidage (42) qui, en position de travail, est laissée sur le sol et guide le sous-segment en hauteur, mais qui, en position de transport, ne touche pas le sol, l'espacement des roues de guidage les unes par rapport aux autres et par rapport aux roues du train de roulement étant tel qu'elles passent entre les rangées de plantes utiles (22) en position de travail.

7. Machine de régulation des adventices selon la revendication 1, **caractérisée en ce que** les éléments de coupe (4) présentent au moins 50 pour cent de la largeur de l'arête de coupe (31) jusqu'à leur raccordement à l'arbre afin d'obtenir un flux d'air qui aspire les adventices avant l'opération de coupe.

8. Machine de régulation des adventices selon la revendication 1, **caractérisée en ce que** des éléments de coupe (4) ne sont montés sur la largeur de travail de l'arbre horizontalement rotatif (2) qu'aux endroits qui sont efficaces sur la rangée de plantes utiles (22) en position de travail, mais pas dans les régions (33) qui se trouvent au-dessus de l'espace inter-rangées (23) en position de travail.

9. Machine de régulation des plantes adventices selon la revendication 8, **caractérisée en ce que** des pales éoliennes coudées provoquant une aspiration vers le haut de la masse de plantes adventices et l'engagement de celle-ci dans la région située au-dessus de la rangée de plantes utiles (22) sont montées sur la largeur de travail de l'arbre horizontalement rotatif dans les régions (33) qui se trouvent au-dessus de l'espace inter-rangées (23) en position de travail.

10. Machine de régulation des plantes adventices selon la revendication 1, **caractérisée en ce que** la hauteur de travail de l'arbre horizontalement rotatif (2) peut être ajustée grâce à un entraînement hydraulique, pneumatique ou électromécanique.

11. Machine de régulation des adventices selon la revendication 10, comprenant en outre au moins un système de capteur permettant de détecter les plantes utiles (20) et d'enregistrer leur hauteur de croissance, **caractérisée en ce que** la hauteur de travail de l'arbre rotatif (2) muni d'éléments de coupe (4) est modifiée automatiquement sur place dans le champ de sorte que la hauteur efficace des éléments de coupe (4) est adaptée à différents endroits du champ en fonction de la hauteur de croissance détectée en cas de variation de ladite hauteur de croissance des plantes utiles (20).
